(19) Europäisches Patentamt
European Patent Office
Office européen des brevets

(11) **EP 1 217 389 B1**

(12) **FASCICULE DE BREVET EUROPEEN**

(45) Date de publication et mention
de la délivrance du brevet:
**16.03.2011 Bulletin 2011/11**

(51) Int Cl.:
***G01V 1/00*** *(2006.01)*

(21) Numéro de dépôt: **01402989.6**

(22) Date de dépôt: **22.11.2001**

(54) **Méthode et dispositif de prospection sismique par émission simultanée de signaux sismiques obtenus en codant un signal par des séquences pseudo aléatoires**

Seismisches Prospektionsverfahren und Vorrichtung mit gleichzeitiger Ausstrahlung von pseudozufallssequenzkodierten seismischen Signalen

Seismic prospecting method and device using simultaneously emitted signals, derived by coding a signal with pseudorandom sequences

(84) Etats contractants désignés:
**DE FR GB NL**

(30) Priorité: **21.12.2000 FR 0016831**

(43) Date de publication de la demande:
**26.06.2002 Bulletin 2002/26**

(73) Titulaire: **Institut Français du Pétrole**
**92852 Rueil-Malmaison Cedex (FR)**

(72) Inventeur: **Becquey, Marc**
**92500 Rueil Malmaison (FR)**

(56) Documents cités:
**EP-A- 0 266 054 US-A- 4 675 851**
**US-A- 4 780 856 US-A- 5 406 530**
**US-A- 5 721 710**

## Description

La présente invention concerne une méthode et un dispositif de prospection sismique terrestre par émission simultanée dans le sol de signaux sismiques émis par plusieurs vibrateurs ou groupes de vibrateurs, ces signaux obtenus en codant un signal par des séquences pseudo-aléatoires, et notamment d'un signal périodique modulé en phase par de telles séquences.

## Etat de la technique

On connaît des procédés de prospection sismique terrestre comportant la transmission dans le sol pendant plusieurs secondes, d'un signal périodique dont la fréquence varie de façon continue à l'intérieur d'une bande de fréquence, la réception par des capteurs des signaux réfléchis par des réflecteurs souterrains et l'enregistrement des signaux reçus. Du fait de la durée de l'émission, les signaux captés à chaque instant sont des combinaisons de signaux réfléchis par des réflecteurs situés à des profondeurs très différentes. L'image des différents réflecteurs du sous-sol ne peut être retrouvée que par un traitement des signaux captés comportant leur mise en corrélation avec les signaux émis. Le résultat du traitement est identique à celui obtenu en convoluant la fonction d'auto-corrélation du signal émis par la suite des coefficients de réflexion des différents réflecteurs. On obtient une trace sismique qui est l'image des interfaces entre les différentes couches géologiques à mi-distance entre les emplacements d'émission et de réception. Un tel procédé est décrit, par exemple par le brevet US N° 2.688.124.

Ce procédé présente certains inconvénients. La fonction d'auto-corrélation qui est obtenue dans ce cas présente des pics secondaires de part et d'autre du pic principal, dont l'amplitude n'est pas négligeable. En outre, un intervalle de temps au moins égal à la durée de propagation aller et retour des ondes émises jusqu'au réflecteur le plus profond de la zone explorée que l'on désigne par "intervalle d'écoute" doit être ménagé entre deux séquences d'émission successives, de manière que les signaux forts captés au début de la séquence d'enregistrement correspondante, ne puissent venir masquer les signaux les plus faibles émanant de réflecteurs plus lointains, captés à la fin de la séquence d'enregistrement précédente. Les interruptions nécessaires de l'émission pendant un intervalle de temps d'écoute relativement important ont pour effet de limiter l'énergie transmise.

On connaît aussi un autre procédé où différents vibrateurs émettent simultanément des signaux avec un balayage en fréquence identique, leurs émissions étant décalées d'un temps au moins égal au temps d'écoute.

Séquences binaires pseudo-aléatoires

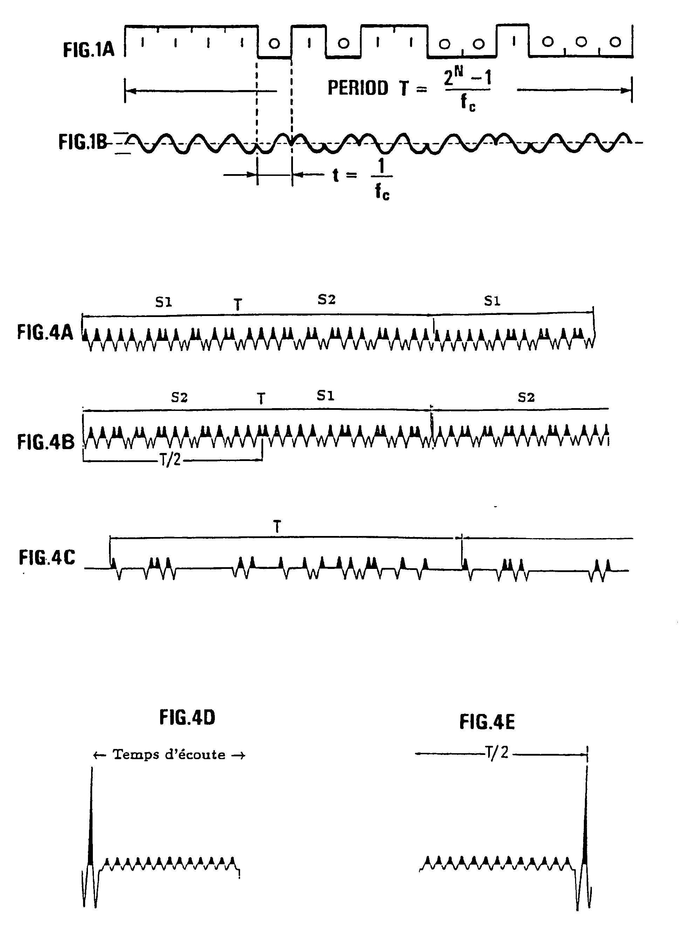

D'autres procédés connus de prospection sismique terrestre exploitent une technique bien connue dans le domaine des communications et du radar. Ils comportent l'utilisation de sources périodiques transmettant des signaux obtenus en modulant la phase d'un signal porteur périodique par un signal binaire ou code pseudo-aléatoire constitué d'une séquence d'éléments pouvant prendre deux valeurs logiques 0 ou 1. Comme le montre la Fig.1, l'ordre de succession de ces valeurs est choisi de manière à présenter un caractère aléatoire.

Lorsque, pour un tel code, toute suite de n bits successifs (n entier) ne peut se répéter à l'identique qu'après une séquence de $(2^n - 1)$ bits la séquence est dite «Séquence Binaire de Longueur Maximale», en abrégé SBLM. Ces séquences binaires pseudo-aléatoires peuvent être utilisées pour moduler en phase un signal périodique, chaque élément de la séquence étant associé à une période du signal, en conservant ou en inversant le signe suivant qu'il s'agit d'un « 1 » ou d'un « 0 ». On désignera par le terme de « séquence élémentaire » une portion du signal périodique modulé par une séquence binaire de $(2^n - 1)$ termes, de durée $(2^n - 1).Tc$ où Tc représente la période du signal porteur.

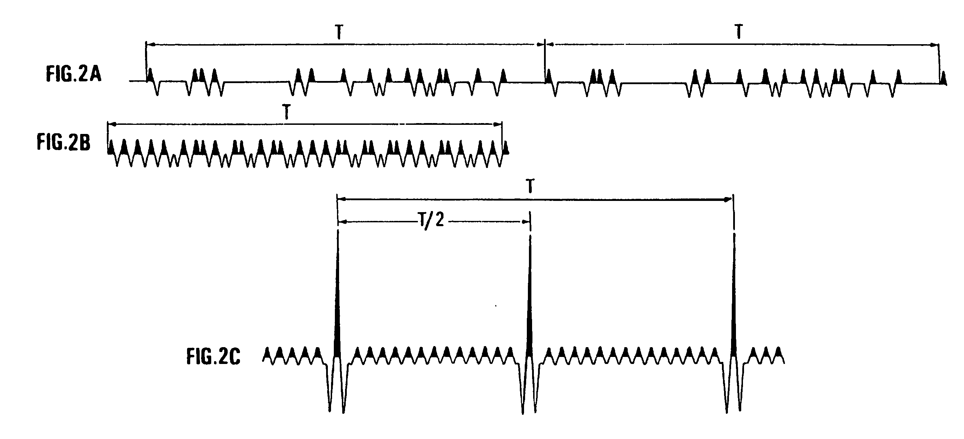

La corrélation par une séquence élémentaire, d'un signal composé par la répétition de cette séquence élémentaire modulée par la séquence élémentaire (Fig. 2b) donne (Fig.2c) des pics espacés (en temps) de la durée de la séquence $T_s$ et un niveau minimal (voire nul) entre les pics, ou, plus exactement sur la durée de la séquence moins la période de la porteuse $T_c$. Le rapport du pic de corrélation au bruit de corrélation est égal au nombre de termes de la séquence.

De tels procédés sont décrits, par exemple, dans les brevets US N° 3 234 504, 3 264 606, 4 034 333 et 4 069 470.

Par le brevet FR 2 589 587 (USP n° 4 780 856) du demandeur, on connaît une méthode de prospection sismique marine où les moyens d'émission comportent au moins un vibrateur remorqué par un navire progressant de façon continue le long d'un profil sismique à étudier, émettant une suite ininterrompue de séquences constituées chacune d'une signal porteur périodique modulé en phase par un signal de codage binaire pseudo-aléatoire de longueur maximale. Les signaux renvoyés par les discontinuités du milieu sont corrélés avec les signaux codés émis, de manière à obtenir des pics de corrélation à des intervalles de temps inférieurs et au plus égaux à la période de répétition des séquences d'émission successives. La source périodique peut être unique, la corrélation est effectuée entre les signaux reçus et alternativement deux séquences de signaux émis déductibles l'une de l'autre par un décalage de temps inférieur à la période de répétition des séquences. On choisit par exemple un décalage égal à la demi-période de répétition des séquences de signaux émis.

On peut utiliser aussi au moins deux sources périodiques émettant simultanément des séquences de signaux identiques mais décalés dans le temps l'un par rapport à l'autre et on établit une corrélation entre les signaux reçus qui correspondent aux signaux émis simultanément par les sources et au moins une séquence des signaux codés, de manière à obtenir en alternance des pics de corrélation correspondant à chacune des sources périodiques.

L'utilisation en prospection sismique terrestre de vibrateurs émettant simultanément ou insuffisamment séparés dans le temps présentent des inconvénients liés à différents facteurs : le bruit d'auto-corrélation, les harmoniques et les ondes lentes.

Bruit d'autocorrélation

Le signal vibrosismique est compressé en corrélant les signaux enregistrés par le signal pilotant le vibrateur (ou par une combinaison des signaux des accéléromètres de plaque et de masse du vibrateur). On obtient ainsi l'équivalent de la corrélation de la série des coefficients de réflexion par l'autocorrélation du signal émis. Le signal émis est généralement un balayage linéaire en fréquence, dont le spectre d'amplitude est soit un créneau, soit de préférence une courbe en cloche pour diminuer l'amplitude des rebonds.

La question des bruits d'autocorrélation se pose pour tous les enregistrements vibrosismiques. Les rebonds diminuent avec le temps en $\dfrac{1}{t}$ sensiblement.

Pour un enregistrement isolé, les rebonds d'autocorrélation des grandes valeurs de début de trace sont suffisamment atténués au moment où reviennent les réflexions les plus faibles de fin de trace. Dans le cas d'un balayage par glissement de fréquence, l'enregistrement est semi-continu et les rebonds des grandes valeurs se retrouvent en avant et en arrière et peuvent interférer sur les valeurs faibles des réflexions profondes du tir précédent si le temps de glissement est insuffisant.

Harmoniques

Pour un enregistrement vibrosismique isolé, la distorsion harmonique rajoute des oscillations au signal corrélé. Si le balayage est effectué depuis les basses fréquences vers les hautes fréquences, les oscillations dues à la corrélation des harmoniques par le signal pilote sont des précurseurs. Ainsi, sauf pour les traces les plus proches sur lesquelles se trouve le bruit de surface, les bruits dus à la corrélation des harmoniques se mélangent avec un signal plus précoce, donc en principe plus fort. Pour les enregistrements continus de type balayage glissant (« slip sweep ») le bruit dû aux harmoniques des arrivées précoces d'un tir peut se superposer aux arrivées tardives, plus faibles, du tir précédent.

Ondes lentes

Si le temps qui sépare le début de deux tirs successifs diminue, les ondes les plus lentes d'un tir, ondes aériennes et ondes de surface, risquent de se retrouver sur le tir suivant. Les balayages étant identiques d'un tir à l'autre, l'onde aérienne et les bruits de surface seront comprimés de la même façon sur les deux tirs.

Séquences à corrélation minimale.

Il est connu des gens de l'art qu'il existe pour chaque taille de SBLM, des couples à corrélation minimale pour lesquelles le rapport du pic central au plus grand pic secondaire est égal à :

$$\frac{2^n - 1}{1 + 2^{partieentière(\frac{n+2}{2})}}$$

soit environ 30 dB pour n=11, correspondant à $2^{11} - 1 = 2047$ périodes du signal porteur (34 secondes pour une porteuse de 60 Hz). Il existe des séquences connectées dont les corrélations sont deux à deux minimales. Le nombre de séquences de chaque ensemble dépend de la taille des séquences. Pour une séquence de 2047 éléments, ce nombre est de 4.

**La méthode selon l'invention**

La méthode selon l'invention permet de réaliser des opérations de prospection ou de surveillance d'une formation souterraine par ondes élastiques. Elle comporte l'émission dans le sol de séquences élémentaires formées par codage d'un signal par des séquences pseudo-aléatoires, la réception et l'enregistrement des signaux renvoyés par les discontinuités du sous-sol en réponse aux signaux émis, et le traitement des signaux enregistrés par corrélation avec des signaux composés à partir des signaux émis. Les signaux sont émis simultanément par plusieurs sources sismiques pilotées chacune par un signal composé d'une séquence élémentaire d'une durée au moins égale au produit du nombre de sources sismiques vibrant simultanément par le temps d'écoute, la contribution respective de chacune des différentes sources sismiques étant séparée en corrélant les signaux reçus et enregistrés par des signaux construits à partir de la dite séquence élémentaire, augmentée, à droite et à gauche, de parties d'une durée au moins égale au temps d'écoute, de cette même séquence élémentaire, obtenues par permutation circulaire.

Suivant un mode préféré de mise en oeuvre, on forme les séquences élémentaires par modulation en phase d'un signal périodique et on applique ces séquences à des vibrateurs.

On applique par exemple une même séquence de pilotage à tous les vibrateurs, avec décalage et permutation circulaire, les décalages en temps entre deux séquences étant au moins égaux au temps d'écoute, et la durée de la séquence élémentaire de pilotage étant au moins égale à la somme des décalages et du temps d'écoute.

Suivant un autre mode de mise en oeuvre, on pilote les vibrateurs par un ensemble connecté de plusieurs séquences à intercorrélation minimale, chaque vibrateur émettant une vibration avec sa séquence propre indépendamment des autres vibrateurs.

Suivant un autre mode de mise en oeuvre, on combine les deux modes précédents en répartissant les vibrateurs en plusieurs groupes, et on affecte à chaque groupe une séquence pseudo-aléatoire appartenant à un même groupe de séquences à intercorrélation minimale, les différents vibrateurs d'un même groupe étant pilotés par la même séquence élémentaire avec les dits décalages.

Le dispositif de prospection ou de surveillance d'une formation par ondes élastiques selon l'invention, comprend au moins un groupe de m vibrateurs, un ensemble de pilotage adapté à appliquer aux différents vibrateurs, des séquences élémentaires formées par modulation en phase d'un signal périodique par des séquences pseudo-aléatoires, des récepteurs sismiques couplés avec le terrain, un système d'acquisition et d'enregistrement des signaux sismiques renvoyés par les discontinuités du sous-sol en réponse aux signaux périodiques émis et un système de traitement des signaux sismiques enregistrés, par corrélation avec une partie des signaux périodiques émis. L'ensemble de pilotage comporte un générateur de signaux périodiques et un ensemble de modulation pour former m séquences élémentaires modulées en phase par une séquence pseudo-aléatoire et des moyens de connexion pour appliquer simultanément aux différents vibrateurs de chaque groupe, les signaux produits par l'ensemble de modulation.

Suivant un premier mode de réalisation, l'ensemble de modulation comporte des moyens pour engendrer au moins une séquence pseudo-aléatoire de pilotage, des moyens de décalage pour former au moins un ensemble de m séquences élémentaires respectivement décalées dans le temps les unes par rapport aux autres, des moyens de modulation en phase des signaux périodiques engendrés par le dit générateur respectivement par les m séquences élémentaires, générant m signaux périodiques modulés en phase.

Suivant un autre mode de réalisation, l'ensemble de modulation comporte des moyens pour engendrer au moins une séquence pseudo-aléatoire de pilotage, des moyens de modulation pour moduler, par la dite séquence, les signaux périodiques engendrés par le générateur, et des moyens de décalage pour produire m signaux périodiques modulés décalés dans le temps les uns par rapport aux autres.

Le dispositif comporte par exemple p groupes de vibrateurs, et l'ensemble de pilotage est adapté à engendrer p séquences élémentaires à intercorrélation minimale et à appliquer ces séquences avec un décalage aux vibrateurs de chaque groupe.

Suivant un mode de mise en oeuvre du dispositif, on installe les vibrateurs de façon permanente pour la surveillance sismique d'une zone souterraine.

La méthode selon l'invention, avec cette utilisation de signaux périodiques obtenus par modulation de phase d'un signal porteur par des séquences binaires pseudo-aléatoires, et cet enregistrement simultané de plusieurs sources sismiques, permet de minimiser les bruits de corrélation et d'éviter les bruits de corrélation d'harmoniques. Elle se prête mieux à la pratique de l'enregistrement simultané que les balayages en fréquence utilisés classiquement en prospection sismique terrestre.

**Présentation sommaire des figures**

D'autres caractéristiques et avantages de la méthode et du dispositif selon l'invention, apparaîtront à la lecture de la description ci-après, en se référant aux dessins annexés où :

- les Fig.1a à 1b montrent des exemples de signaux obtenus par déplacement de phase ;

- les Fig.2a à 2c montrent des exemples de signaux obtenus par corrélation d'une séquence SBLM ;

- les Fig.3a à 3C montrent des exemples de signaux obtenus par corrélation par une séquence décalée ;

- les Fig.4a à 4e montrent différents signaux enregistrés correspondant à deux sources périodiques modulées en phase émettant simultanément ;

- la Fig.5 montre schématiquement le dispositif ;

- la Fig.6 montre l'ensemble de pilotage des différents vibrateurs; et

- La Fig.7 montre une variante de l'ensemble de pilotage.

**Description détaillée**

**Corrélation par une séquence décalée**

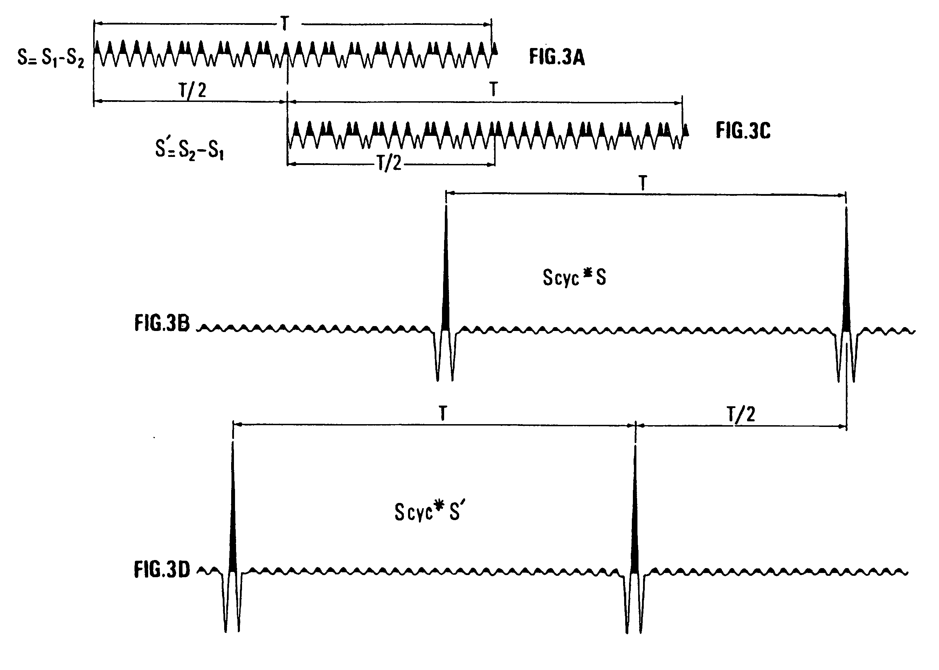

Soit un signal sinusoïdal de fréquence $f_c$ (et de période $T_c = \dfrac{1}{f_c}$) modulé par une séquence SBLM S de durée $T_s = (2^n - 1)T_c$, avec n entier. On décompose la séquence S en deux sous-séquences $S_1$, composée des $2^{N-1}$ premières périodes de porteuse de S et $S_2$, composé du reste de la séquence, soit $2^{n-1}- 1$ périodes de porteuse, $S = (S_1 S_2)$ (Fig.3a). Soit $S_{cyc}$ le signal périodisé à partir de la séquence S, c'est-à-dire composé de cycles (S S S ...). La corrélation de $S_{cyc}$ par la séquence élémentaire $S$ donne (Fig.3b) des pics espacés de la durée de la séquence $T_s$. Si l'on construit une autre séquence SBLM par décalage de $2^{n-1}$ termes et complément par permutation circulaire, soit la séquence $S'=(S_2 S_1)$ (Fig. 3c), la corrélation de $S_{cyc}$ par $S'$ donne également des pics espacés les uns des autres d'une durée $T_S$ (Fig.3d). Ces pics seront décalés d'un temps $2^{n-1} T_C$, correspondant à la durée de S1, par rapport aux pics de la corrélation $S_{cyc} * S$.

## Sismique terrestre - temps de vibration et temps d'écoute

En prospection sismique terrestre, la source vibre en point fixe et interrompt sa vibration le temps nécessaire pour la déplacer jusqu'à une position suivante et la coupler avec le sol. Il convient donc de déterminer les relations entre la durée du cycle séquence élémentaire, la durée de vibration, et le temps d'écoute. On désigne ci-après par « temps d'écoute », le temps de trajet maximal entre une source et un récepteur d'ondes, d'une onde élastique qui va se réfléchir sur le réflecteur le plus profond de la zone explorée.

On considère un réflecteur souterrain au temps $t$ (temps nécessaire pour que l'onde sonore aille de la source au(x) récepteur en se réfléchissant sur le réflecteur). Si la source émet une vibration cyclique $S_{cyc}$ de séquence élémentaire $S$, l'enregistrement récupérera cette vibration à partir du temps $t$. La corrélation par la séquence élémentaire $S$, donnera un pic au temps $t$, c'est-à-dire un signal entre $t - T_c$ et $t + T_c$ où $T_c$ est la période de la porteuse, d'autres pics espacés de multiples de la durée de la séquence élémentaire $T_s$, et un bruit minimal entre les pics, donc entre $t - T_s + T_c$ et $t + T_s - T_c$.

Pour un réflecteur au temps 0, on aura donc un signal étroit de 0 à $T_c$ et un plateau à bruit minimal jusqu'à $T_s - T \geq T_e$. Pour un réflecteur à un temps $T_c < t \leq T_e \leq T_s T_c$, on aura un signal étroit entre $t - T_c$ et $t + T_c$ et un plateau à bruit de corrélation minimal de 0 à $t - T_c$ et de $t + T_c$ à $T_e$. La corrélation de $S_{cyc}$ par sa séquence élémentaire $S$ permet de retrouver la série de coefficients de réflexion, convoluée par un signal à trois arches de largeur totale $2T_c$.

Pour une corrélation sur un temps égal au temps d'écoute $T_e$, le signal émis peut être limité à une portion du signal cyclique $S_{cyc}$ de durée $T_s + 2T_e$ égale à la somme de la durée de la séquence et de deux fois le temps d'écoute, la séquence élémentaire occupant le centre de cette portion de signal cyclique.

De la même façon, on peut émettre un signal composé d'une seule séquence élémentaire et corréler l'enregistrement de signaux réfléchis par une portion de répétition cyclique de cette séquence élémentaire de durée $T_s + 2T_e$, cette séquence élémentaire occupant le centre de cette portion de signal cyclique.

On considère le cas où l'on enregistre simultanément deux sources vibrant l'une avec le signal $S_{cyc}$, de durée au moins égale au double du temps d'écoute, décomposée en deux sous-séquences S1 et S2, chaque sous-séquence étant égale ou supérieure au temps d'écoute, l'autre vibrant avec la séquence décalée et complétée par permutation circulaire composée des deux séquences S2 et S1. Le mécanisme de la séparation de ces deux enregistrements est illustré par les Fig. 4a à 4e.

La première vibration V1 (Fig.4a) est constituée des deux sous-séquences S1, S2.

Le signal V2 est obtenu (Fig.4b) par décalage et permutation circulaire de V1. V2 est composé dans l'ordre des sous séquences S2 et S1. Le troisième signal (Fig.4c) est la somme de V1 et de V2. La corrélation du signal V1 par la portion de signal cyclique formé à partir de la séquence élémentaire (S2 S1 S2 S1) (Fig.4d) entre les temps 0 et Te, fait apparaître un pic au temps t, et un bruit de corrélation très faible de 0 à $t - T_c$ et de $t + T_c$ à Te.

La corrélation de V2 par la séquence décalée et permutée (S1 S2 S1 S2) (Fig.4e) donne un pic à $t + T_e$ (lorsque la séquence (S1 S2) sera en face d'une séquence identique) et rien autour. De 0 au temps d'écoute, on n'aura que le bruit de corrélation (minimal).

On en déduit que la corrélation de 0 au temps d'écoute du signal somme (Fig.4c) par la séquence (S2 S1 S2 S1) redonnera le pic correspondant au signal V1 superposé au bruit de corrélation (minimal) avec V2, alors que la corrélation par la séquence décalée et permutée (S1 S2 S1 S2) donnera le pic correspondant au signal V2. Les signaux des vibrateurs vibrant simultanément sont séparés par corrélations successives avec des séquences décalées (au moins du temps d'écoute) complétées par permutation circulaire.

## Généralisation à m sources

On peut généraliser le résultat précédent pour m vibrateurs. Considérons m vibrateurs vibrant simultanément pendant une durée $Tv = (m-1)T_e$. Le signal émis par le premier vibrateur est une séquence élémentaire de durée au moins égale au produit du nombre m de vibrateurs vibrant simultanément par le temps d'écoute soit $T_s \geq mT_e$. Cette séquence peut être décomposée en m morceaux de durée $S_1, S_2,..., S_n$ supérieure ou égale au temps d'écoute. La corrélation de l'enregistrement d'un signal réfléchi, commençant à arriver au temps, par le signal de corrélation $(S_n, S_1, S2..., S_n, S_1)$, donne un pic au temps $t$ et un bruit de corrélation très faible partout ailleurs entre 0 et $T_e$. La corrélation de l'enregistrement entre 0 et $T_e$ par l'une quelconque des séquences déduites de la première séquence par permutation circulaire avec un décalage d'un multiple de $T_e$ : $(S_2, S_3,..., S_n, S_1)$, $(S_3,..., S_n, S_1, S_2)$, ..., $(S_n, S_1, S_2,..., S_{n-1})$ ne donnera qu'un bruit de corrélation minimum.

Si un deuxième vibrateur vibre en même temps que le premier avec une séquence décalée et complétée par permutation circulaire $S' = S_2 S_3 ... S_n$, la corrélation par $S$ ne fera apparaître qu'un bruit de corrélation minimal. Seule la corrélation par $S'$ fera apparaître un pic au temps $t$.

L'enregistrement simultané de plusieurs vibrateurs peut ainsi être décomposé en composantes liées à chacun des vibrateurs par corrélations successives avec des séquences décalées du temps d'écoute et complétées à droite et à gauche par les sous-séquences les plus proches du point de vue de la permutation circulaire, ou, si ces sous-séquences sont supérieures au temps d'écoute, par des portions d'une durée égale au temps d'écoute.

**Exemple**

On considère cinq vibrateurs, vibrant simultanément avec des séquences SBLM de $2^{10} - 1 = 1023$ termes modulant une porteuse à 60 Hz et déduites les unes des autres par décalage et permutation circulaire.

La durée de la séquence sera donc $\dfrac{1023}{60}$ - 17 secondes. Le temps d'écoute correspondra (à quelques périodes de porteuse près) au cinquième de la durée de la séquence, soit $\dfrac{17}{5}$ ~ 3,4 secondes. La durée de la vibration (simultanée) des vibrateurs sera 17 secondes. Le signal de corrélation aura une longueur de 17+2x3.4=23.8 s.

**Séquences à corrélation minimale**

Si l'on accepte un bruit de corrélation de -30dB, on peut utiliser par exemple un dispositif d'émission comprenant 4 lignes de 5 vibrateurs chacune, vibrant simultanément pilotés par une séquence de 34 s, et pour un temps d'écoute de 6,8 s. Sur une première ligne, les vibrateurs vibrent simultanément ou non, avec la même séquence convenablement décalée comme on l'a vu. On pilote les lignes suivantes de vibrateurs par des séquences appartenant à l'ensemble de séquences à corrélation minimale auquel appartient la première séquence. Les vibrateurs de chaque ligne partent dès qu'ils sont sur site et prêts à vibrer. Il n'est pas nécessaire de se préoccuper de synchroniser les départs des différentes lignes. Ainsi, on peut obtenir un gain sensible de la productivité

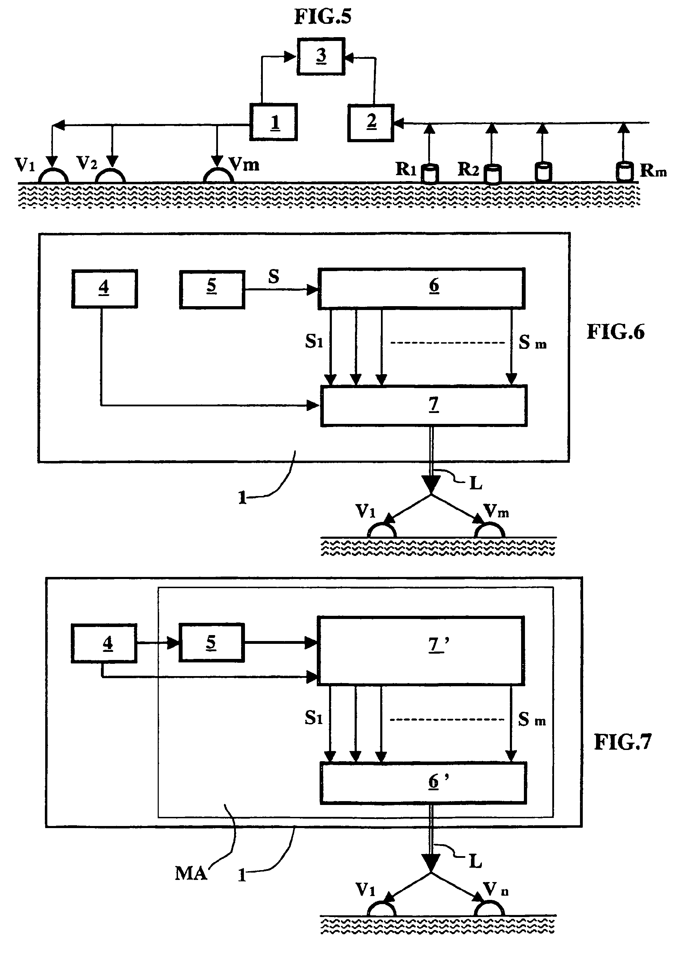

Le dispositif de mise en oeuvre comporte (Fig. 5) un ensemble de pilotage 1 destiné à appliquer à m vibrateurs couplés avec le terrain, des signaux périodiques modulés en phase, un système 2 pour acquérir et enregistrer les signaux captés par des récepteurs sismiques R1-Rk couplés avec le terrain en réponse aux signaux périodiques émis, et un système de traitement 3 des signaux sismiques captés par les récepteurs R1 à Rk, tel qu'un ordinateur programmé, par corrélation avec les signaux émis.

L'ensemble de pilotage 1 comporte un générateur 4 de signaux périodiques, et un ensemble de modulation MA destiné à générer à partir des signaux périodiques, m signaux périodiques modulés en phase pour leur applications aux m vibrateurs V1-Vm.

Suivant un premier mode de réalisation (Fig.6), l'ensemble de modulation MA comporte des moyens 5 pour engendrer au moins une séquence pseudo-aléatoire de pilotage, des éléments 6 de décalage pour former, à partir de la dite séquence, au moins un ensemble de m séquences binaires pseudo-aléatoires respectivement décalées dans le temps les unes par rapport aux autres. Les décalages sont répartis sur la durée de la séquence de pilotage en fonction du nombre m de vibrateurs de chaque groupe.

Un dispositif 7 de modulation en phase est connecté au générateur de signaux 4 et aux éléments de décalage 6 des signaux périodiques et génère m signaux périodiques modulés en phase. Le dispositif 7 est connecté par des moyens de connexion (L) aux différents vibrateurs (V1-Vm) de chaque groupe.

Suivant un deuxième mode de réalisation (Fig. 7), l'ensemble de modulation MA comporte des moyens 5 pour engendrer au moins une séquence pseudo-aléatoire de pilotage, un dispositif de modulation 7' pour moduler les signaux périodiques engendrées par le générateur (4) par la dite séquence, des moyens de décalage 6' pour produire m signaux périodiques modulés décalés dans le temps les uns par rapport aux autres. Le dispositif 7' est connecté pareillement aux différents vibrateurs (V1-Vm) de chaque groupe par des moyens de connexion L.

On peut choisir le type de séquence pseudo-aléatoire que l'on veut pour moduler en phase des signaux.

**Revendications**

1. Méthode de prospection ou de surveillance d'une formation souterraine par ondes élastiques, comprenant l'émission dans le sol de séquences élémentaires formées par codage d'un signal périodique par des séquences pseudo-aléatoires, la réception et l'enregistrement des signaux renvoyés par les discontinuités du sous-sol en réponse aux signaux émis, et le traitement des signaux enregistrés par corrélation avec des signaux composés à partir des signaux émis, **caractérisée en ce que** les signaux sont émis simultanément par plusieurs vibrateurs (V1-Vm) pilotées chacune par un signal composé d'une séquence élémentaire, d'une durée au moins égale au produit du nombre de vibrateurs vibrant simultanément par le temps d'écoute, ou respectivement par la séquence élémentaire augmentée avant et après de parties de cette même séquence élémentaire d'une durée au moins égale au temps d'écoute, ladite séquence élémentaire de chaque signal étant décalée et complétée par permutation circulaire, et ladite séquence élémentaire étant formée par modulation en phase d'un signal périodique par des séquences pseudo-aléatoires, la contribution respective de chacun des différents vibrateurs étant séparé en corrélant les signaux reçus et enregistrés par des signaux construits à partir de la dite séquence élémentaire, augmentée, avant et après de parties de cette même séquence élémentaire d'une durée au moins égale au temps d'écoute, obtenues par permutation circulaire, ou respectivement à partir de la séquence élémentaire.

2. Méthode selon la revendication 1, **caractérisée en ce que** l'on applique une même séquence de pilotage à tous les vibrateurs, avec décalage et permutation circulaire, les décalages en temps entre deux vibrateurs étant au moins égaux au temps d'écoute, et la durée de la séquence élémentaire de pilotage étant au moins égale à la somme des décalages et du temps d'écoute.

3. Méthode selon la revendication 2, **caractérisée en ce que** l'on répartit les vibrateurs en plusieurs groupes, et on affecte à chaque groupe une séquence pseudo-aléatoire appartenant à un même groupe de séquences à intercorrélation minimale, les différents vibrateurs d'un même groupe étant pilotés par la même séquence élémentaire avec les dits décalages.

4. Dispositif de prospection ou de surveillance d'une formation souterraine par ondes élastiques, comprenant au moins un groupe de m vibrateurs (V1-Vm), un ensemble (1) de pilotage des différents vibrateurs par des signaux périodiques modulés en phase, des récepteurs sismiques (R1-Rk) couplés avec le terrain, un système (2) d'acquisition et d'enregistrement des signaux sismiques renvoyés par les discontinuités du sous-sol en réponse aux signaux périodiques émis et un système (3) de traitement des signaux sismiques enregistrés, par corrélation avec une partie des signaux périodiques émis, **caractérisé en ce que** :

- l'ensemble de pilotage (1) comporte :

- un générateur (4) de signaux et un ensemble de modulation (MA) pour former m séquences élémentaires modulées en phase par une séquence pseudo-aléatoire, et adaptés à générer à partir desdites m séquences élémentaires, des signaux composés d'une séquence élémentaire, d'une durée au moins égale au produit du nombre de vibrateurs vibrant simultanément par le temps d'écoute, ou respectivement par la séquence élémentaire augmentée avant et après de parties de cette même séquence élémentaire d'une durée au moins égale au temps d'écoute, ladite séquence élémentaire de chaque signal étant décalée et complétée par permutation circulaire, et ladite séquence élémentaire étant formée par modulation en phase d'un signal périodique par des séquences pseudo-aléatoires, et

- des moyens de connexion (L) pour appliquer simultanément aux différents vibrateurs (V1-Vm) de chaque groupe, lesdits signaux composés d'une séquence élémentaire ;

- ledit système (3) de traitement est adapté pour réaliser une corrélation des signaux sismiques enregistrés par des signaux construits à partir de ladite séquence élémentaire, augmentée, avant et après de parties de cette même séquence élémentaire d'une durée au moins égale au temps d'écoute, obtenues par permutation circulaire, ou respectivement à partir de la séquence élémentaire.

5. Dispositif selon la revendication 4, **caractérisé en ce que** l'ensemble de modulation (MA) comporte des moyens (5) pour engendrer au moins une séquence pseudo-aléatoire de pilotage, des moyens de décalage (6) pour former au moins un ensemble de m séquences élémentaires respectivement décalées dans le temps les unes par rapport aux autres, des moyens (7) de modulation en phase des signaux périodiques engendrés par le dit générateur (4) respectivement par les m séquences élémentaires, générant m signaux périodiques modulés en phase.

6. Dispositif selon la revendication 5, **caractérisé en ce que** l'ensemble de modulation (MA) comporte des moyens (5) pour engendrer au moins une séquence pseudo-aléatoire de pilotage, des moyens de modulation (7') pour moduler, par la dite séquence, les signaux périodiques engendrées par le générateur (4), des moyens de décalage (6') pour produire m signaux périodiques modulés décalés dans le temps les uns par rapport aux autres.

7. Dispositif selon l'une des revendications 4 à 6, **caractérisé en ce que** l'ensemble de pilotage (1) est adapté à émettre durant un temps dépendant de la durée de chaque séquence de pilotage et d'un temps d'écoute des signaux vibratoires reçus.

8. Dispositif selon l'une des revendications 4 à 7, **caractérisé en ce qu'**il comporte p groupes de vibrateurs, l'ensemble de pilotage (1) étant adapté à engendrer p séquences élémentaires à intercorrélation minimale et à appliquer ces séquences avec un décalage aux vibrateurs de chaque groupe.

**9.** Dispositif selon l'une des revendications 4 à 8, **caractérisé en ce que** les vibrateurs sont installés de façon permanente pour la surveillance sismique d'une zone souterraine.

**Claims**

**1.** A method of prospecting or monitoring an underground formation by elastic waves, comprising emitting in the ground elementary sequences formed by coding a periodic signal by pseudo-random sequences, receiving and recording the signals reflected by the subsoil discontinuities in response to the signals emitted, and processing the recorded signals by correlation with signals formed from the signals emitted, **characterized in that** the signals are emitted simultaneously by several vibrators (V1-Vm) each controlled by a signal consisting of an elementary sequence, of length at least equal to the product of the number of vibrators vibrating simultaneously by the listening time, or respectively by the elementary sequence extended, before and after, with parts of this elementary sequence of length at least equal to the listening time, said elementary sequence of each signal being time-shifted and complemented by circular permutation, and said elementary sequence being formed by phase modulation of a periodic signal by pseudo-random sequences, the respective contribution of each one of the various vibrators being separated by correlating the received and recorded signals by signals constructed from said elementary sequence extended, before and after, with parts of this elementary sequence of length at least equal to the listening time, obtained by circular permutation, or respectively from the elementary sequence.

**2.** A method as claimed in claim 1, **characterized in that** the same control sequence is applied to all the vibrators, with time shift and circular permutation, the time shifts between two vibrators being at least equal to the listening time, and the length of the elementary control sequence being at least equal to the sum of the time shifts and of the listening time.

**3.** A method as claimed in claims 1 and 2, **characterized in that** the vibrators are divided into several groups, and each group is assigned a pseudo-random sequence belonging to the same group of minimum cross-correlation sequences, the various vibrators of a group being controlled by the same elementary sequence with said time shifts.

**4.** A device for prospecting or monitoring an underground formation by elastic waves, comprising at least one group of m vibrators (V1-Vm), a unit (1) for controlling the various vibrators by phase-modulated periodic signals, seismic receivers (R1-Rk) coupled with the formation, a system (2) for acquiring and recording the seismic signals reflected by the subsoil discontinuities in response to the periodic signals emitted, and a system (3) for processing the recorded seismic signals, by correlation with part of the emitted periodic signals, **characterized in that**:

- control unit (1) comprises:

  - a signal generator (4) and a modulation unit (MA) for forming m elementary sequences phase modulated by a pseudo-random sequence, and suited to generate, from said m elementary sequences, signals consisting of an elementary sequence, of length at least equal to the product of the number of vibrators vibrating simultaneously by the listening time, or respectively by the elementary sequence extended, before and after, with parts of this elementary sequence of length at least equal to the listening time, said elementary sequence of each signal being time shifted and complemented by circular permutation, and said elementary sequence being formed by phase modulation of a periodic signal by pseudo-random sequences, and
  - connection means (L) for applying simultaneously to the various vibrators (V1-Vm) of each group said signals consisting of an elementary sequence,

- said processing system (3) is suited to perform a correlation of the seismic signals recorded by signals constructed from said elementary sequence extended, before and after, with parts of this elementary sequence of length at least equal to the listening time, obtained by circular permutation, or respectively from the elementary sequence.

**5.** A device as claimed in claim 4, **characterized in that** modulation unit (MA) comprises means (5) for generating at least one pseudo-random control sequence, shift means (6) for forming at least one set of m elementary sequences respectively time shifted with respect to one another, means (7) for phase modulation of the periodic signals generated by said generator (4), respectively by the m elementary sequences, generating m phase-modulated periodic signals.

**6.** A device as claimed in claim 5, **characterized in that** modulation unit (MA) comprises means (5) for generating at least one pseudo-random control sequence, modulation means (7') for modulating, by said sequence, the periodic signals generated by generator (4), shift means (6') for producing m modulated periodic signals time shifted with respect to one another.

7.  A device as claimed in any one of claims 4 to 6, **characterized in that** control unit (1) is suited to emit during a time depending on the length of each control sequence and of a received vibratory signal listening time.

8.  A device as claimed in any one of claims 4 to 7, **characterized in that** it comprises p groups of vibrators, control unit (1) being suited to generate p minimum cross-correlation elementary sequences and to apply these sequences with a time shift to the vibrators of each group.

9.  A device as claimed in any one of claims 4 to 8, **characterized in that** the vibrators are permanently installed for seismic monitoring of an underground zone.

**Patentansprüche**

1.  Verfahren zur Prospektion oder Überwachung einer unterirdischen Formation durch elastische Wellen, umfassend das Senden, in den Boden, von Elementarfolgen, geformt durch Codieren eines periodischen Signals durch Pseudozufallsfolgen, das Empfangen und das Speichern - der Signale, die in Antwort auf die gesendeten Signale von den Unregelmäßigkeiten des Untergrunds zurückgeworfen werden, und das Verarbeiten der gespeicherten Signale durch Korrelation mit Signalen, die aus den gesendeten Signalen zusammengesetzt sind, **dadurch gekennzeichnet, dass** die Signale gleichzeitig von mehreren Vibratoren (V1-Vm) gesendet werden, die jeweils durch ein Signal gesteuert werden, das aus einer Elementarfolge einer Dauer zusammengesetzt ist, die mindestens dem Produkt der Zahl der gleichzeitig vibrierenden Vibratoren mit der Abhördauer entspricht, oder jeweils aus der Elementarfolge, davor und danach um Teile dieser selben Elementarfolge einer Dauer verlängert, die mindestens der Abhördauer entspricht, wobei diese Elementarfolge jedes Signals durch zyklische Permutation verschoben und ergänzt wird und die Elementarfolge durch Phasenmodulation eines periodischen Signals durch Pseudozufallsfolgen geformt wird, wobei der jeweilige Beitrag jedes der verschiedenen Vibratoren getrennt wird, indem die empfangenen und gespeicherten Signale durch Signale korreliert werden, die von dieser Elementarfolge ausgehend konstruiert werden, davor und danach verlängert um Teile dieser selben Elementarfolge einer Dauer, die mindestens der Abhördauer entspricht, die durch zyklische Permutation oder jeweils von der Elementarfolge ausgehend erhalten werden.

2.  Verfahren nach Anspruch 1, **dadurch gekennzeichnet, dass** eine selbe Steuersequenz auf alle Vibratoren angelegt wird, mit Verzögerung und zyklischer Permutation, wobei die Zeitverzögerungen zwischen zwei Vibratoren mindestens den Abhördauern entspricht und die Dauer der Steuer-Elementarfolge mindestens der Summe der Verzögerungen und der Abhördauer entspricht.

3.  Verfahren nach Anspruch 2, **dadurch gekennzeichnet, dass** die Vibratoren auf mehrere Gruppen verteilt werden und jeder Gruppe eine Pseudozufallsfolge zugewiesen wird, die einer selben Gruppe von Folgen mit minimaler Interkorrelation angehört, wobei die verschiedenen Vibratoren einer selben Gruppe durch dieselbe Elementarfolge mit den vorgenannten Verzögerungen gesteuert werden.

4.  Vorrichtung zur Prospektion oder Überwachung einer unterirdischen Formation durch elastische Wellen, umfassend mindestens eine Gruppe von m Vibratoren (V1-Vm), ein Steuergerät (1) zur Steuerung der verschiedenen Vibratoren durch phasenmodulierte periodische Signale, seismische Empfänger (R1-Rk), die mit dem Erdreich gekoppelt sind, ein System (2) zur Erfassung und Speicherung der seismischen Signale, die in Antwort auf die gesendeten periodischen Signale von den Unregelmäßigkeiten des Untergrunds zurückgeworfen werden, und ein System (3) zur Verarbeitung der gespeicherten seismischen Signale durch Korrelation mit einem Teil der gesendeten periodischen Signale, **dadurch gekennzeichnet, dass**:

    - das Steuergerät (1) umfasst:

        - einen Signalgenerator (4) und ein Modulationsgerät (MA), um m durch eine Pseudozufallsfolge phasenmodulierte Elementarfolgen zu formen, und geeignet, von diesen m Elementarfolgen ausgehend Signale zu erzeugen, die aus einer Elementarfolge zusammengesetzt sind, deren Dauer mindestens dem Produkt der Zahl der gleichzeitig vibrierenden Vibratoren mit der Abhördauer entspricht, oder jeweils aus der Elementarfolge, davor und danach verlängert um Teile derselben Elementarfolge einer Dauer, die mindestens der Abhördauer entspricht, wobei diese Elementarfolge jedes Signals durch zyklische Permutation verschoben und ergänzt wird und die Elementarfolge durch Phasenmodulation eines periodischen Signals durch Pseudozufallsfolgen geformt wird, und

- Verbindungsmittel (L), um die aus einer Elementarfolge zusammengesetzten Signale gleichzeitig an die verschiedenen Vibratoren (V1-Vm) jeder Gruppe anzulegen;

- wobei das Verarbeitungssystem (3) geeignet ist, eine Korrelation der gespeicherten seismischen Signale mit Signalen herzustellen, die von dieser Elementarfolge ausgehend konstruiert werden, davor und danach verlängert um Teile dieser Elementarfolge einer Dauer, die mindestens der Abhördauer entspricht, die durch zyklische Permutation oder jeweils von der Elementarfolge ausgehend erhalten werden.

5. Vorrichtung nach Anspruch 4, **dadurch gekennzeichnet, dass** das Modulationsgerät (MA) Mittel (5) umfasst, um mindestens eine Pseudozufallssteuerfolge zu erzeugen, Verzögerungsmittel (6), um mindestens eine Gruppe von m Elementarfolgen zu formen, die relativ zueinander zeitlich versetzt sind, Mittel (7) zur Phasenmodulation der vom Generator (4) erzeugten periodischen Signale jeweils durch die m Elementarfolgen, um m phasenmodulierte periodische Signale zu erzeugen.

6. Vorrichtung nach Anspruch 5, **dadurch gekennzeichnet, dass** das Modulationsgerät (MA) Mittel (5) umfasst, um mindestens eine Pseudozufallssteuerfolge zu erzeugen, Modulationsmittel (7'), um die vom Generator (4) erzeugten periodischen Signale durch diese Folge zu modulieren, und Verzögerungsmittel (6'), um m modulierte periodische Signale zu erzeugen, die relativ zueinander zeitlich versetzt sind.

7. Vorrichtung nach einem der Ansprüche 4 bis 6, **dadurch gekennzeichnet, dass** das Steuergerät (1) geeignet ist, eine Zeit lang zu senden, die von der Dauer jeder Steuerfolge oder von einer Abhördauer der empfangenen Vibrationssignale abhängt.

8. Vorrichtung nach einem der Ansprüche 4 bis 7, **dadurch gekennzeichnet, dass** sie p Gruppen von Vibratoren umfasst, wobei das Steuergerät (1) geeignet ist, p Elementarfolgen mit minimaler Interkorrelation zu erzeugen und diese Folgen mit einer Verzögerung an die Vibratoren jeder Gruppe anzulegen.

9. Vorrichtung nach einem der Ansprüche 4 bis 8, **dadurch gekennzeichnet, dass** die Vibratoren auf zur seismischen Überwachung einer unterirdischen Zone permanente Weise installiert sind.

**FIG.1A**

$$\text{PERIOD } T = \frac{2^N - 1}{f_c}$$

**FIG.1B**

$$t = \frac{1}{f_c}$$

**FIG.4A**

S1    T    S2    S1

**FIG.4B**

S2    T    S1    S2

T/2

**FIG.4C**

T

**FIG.4D**

← Temps d'écoute →

**FIG.4E**

T/2

FIG.2A

FIG.2B

FIG.2C

EP 1 217 389 B1

FIG.3A

$S = S_1 - S_2$

FIG.3C

$S' = S_2 - S_1$

$T$   $T/2$

FIG.3B

$S_{cyc} * S$

$T$

FIG.3D

$S_{cyc} * S'$

$T/2$

**FIG.5**

**FIG.6**

**FIG.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2688124 A
- US 3234504 A
- US 3264606 A
- US 4034333 A
- US 4069470 A
- FR 2589587
- US 4780856 A